# EUROPÄISCHE PATENTSCHRIFT

(11) **EP 3 225 366 B1**
(45) Veröffentlichungstag und Bekanntmachung des Hinweises auf die Patenterteilung: **19.04.2023**
(21) Anmeldenummer: 17163226.8
(22) Anmeldetag: 28.03.2017
(51) Int. Cl.: B25J 9/16

(54) **POSITIONSÜBERWACHUNG EINER KINEMATIK**
MONITORING OF THE POSITION OF A KINEMATIC
SURVEILLANCE DE LA POSITION D'UN SYSTÈME CINÉMATIQUE

(30) Priorität: 29.03.2016 AT 502562016
(43) Veröffentlichungstag der Anmeldung: 04.10.2017
(73) Patentinhaber: B&R Industrial Automation GmbH, 5142 Eggelsberg (AT)
(72) Erfinder: Kapeller, Thomas, 5300 Hallwang (AT); Dirschlmayr, Thomas, 5020 Salzburg (AT)
(74) Vertreter: Patentanwälte Pinter & Weiss OG

(56) Entgegenhaltungen:
- EP-A1- 1 901 151
- US-A- 4 578 757
- US-A- 5 056 031
- US-A- 5 347 459
- ELMARAGHY H A ET AL: "APPLICATION OF MAPPING CONCEPTS TO MULTI-ROBOT COLLISION AVOIDANCE AND TASK PLAN EXECUTION", PROCEEDINGS OF THE PACIFIC RIM CONFERENCE ON COMMUNICATIONS, COMPUTERS AND SIGNAL PROCESSING. VICTORIA, MAY 19 - 21, 1993; [PROCEEDINGS OF THE PACIFIC RIM CONFERENCE ON COMMUNICATIONS, COMPUTERS AND SIGNAL PROCESSING], NEW YORK, IEEE, US, Bd. 2 OF 02, 19. Mai 1993 (1993-05-19), Seiten 466-469, XP000419317,

## Beschreibung

Die gegenständliche Erfindung behandelt ein Verfahren zur Positionsüberwachung einer Kinematik, wobei zumindest ein Teil der Kinematik in eine Anzahl Kinematikobjekte modelliert wird und ein zu überwachender Überwachungsbereich vorgegeben wird.

Da Fertigungsprozesse auf dem Gebiet der Robotik auf immer kleinerem Raum realisiert werden sollen, überschneiden sich die Arbeitsbereiche von Robotern (allgemein auch als Kinematik bezeichnet) oft mit denen von anderen Objekten wie ortsfesten Installationen, Robotern, Maschinen oder Menschen. Als Kinematik werden sowohl serielle Kinematiken, als auch parallele Kinematiken, aber auch Mischungen davon, verstanden, wobei eine serielle oder parallele Kinematik in bekannter Weise eine Anzahl von miteinander, über starre Verbindungselemente, seriell oder parallel (z.B. Tripod oder Hexapod) verbundenen Gelenke aufweist. Um einen reibungslosen Ablauf garantieren zu können, muss daher sichergestellt werden, dass keine Kollisionen zwischen einem Roboter und anderen Objekten in diesen gemeinsam genutzten Arbeitsräumen auftreten. Ebenso sind oftmals für Roboter definierte Arbeitsbereiche oder definierte Sicherheitsbereiche definiert, die vom Roboter, oder Teilen davon, nicht verlassen werden oder nicht passiert werden dürfen. Insbesondere ist aufgrund hoher und steigender Sicherheitsanforderungen der Schutz für Menschen und Objekte zu gewährleisten.

Es existieren bereits verschiedene Modelle von Kollisionsüberwachungen, welche meist einen Kompromiss aus Genauigkeit, Flexibilität und erforderlicher Rechenleistung darstellen. Meist werden sowohl Roboter(teile), als auch Arbeitsraumgrenzen mithilfe geometrischer Körper (Kugeln, Pyramiden, Voxels) approximiert und während der Bewegung des Roboters laufend überprüft, ob es räumliche Überschneidungen zwischen diesen geometrischen Körpern gibt. Somit wird dafür gesorgt, dass ein Roboter einen gewissen Arbeitsbereich (Work Space) nicht verlässt bzw. eine gewisse Sicherheitsbereich (Safe Space) nicht betritt. Dies wird meist durch Berechnung von Schnittpunkten/Schnittlinien/Schnittflächen geometrischer Körper (z.B. zwischen einem Roboterarm und einem Sicherheitsbereich) erreicht, was jedoch rechenaufwändig ist. Die DE 10 2007 037 077 A1 bestimmt beispielsweise ob in einer zukünftigen Pose eine dreidimensionale Einhüllende in eine Grenzzone eintritt, die DE 10 2004 019 888 B2 modelliert Roboterteile in Form von Kugeln und prüft ebenso das Eindringen der Kugeln in Sicherheitsbereiche. Die US 4,578,757 A zeigt ein Schneiden zweier dreidimensionaler Körper. Gerade im Bereich Sicherheit sind jedoch ein geringerer Rechenaufwand und damit eine schnelle Reaktionszeit wünschenswert. Je geringer die Reaktionszeit, umso später muss der Roboter auf kritische Situationen reagieren.

Es ist somit die Aufgabe der vorliegenden Erfindung ein Verfahren anzugeben, um ein Verlassen von Arbeitsbereichen, bzw. ein Betreten von Sicherheitsbereichen durch eine Kinematik mit geringerem Rechenaufwand und damit schneller zu erkennen.

Diese Aufgabe wird durch ein Verfahren zur Positionsüberwachung einer Kinematik gelöst, bei welchem zumindest ein Teil der Kinematik mit einer Anzahl an Kinematikobjekten modelliert wird und ein zu überwachender Überwachungsbereich vorgegeben wird. Dabei werden eine Anzahl der Kinematikobjekte jeweils mit einer Dimension von Null oder einer Dimension von Eins modelliert. Für jedes modellierte Kinematikobjekt wird jeweils aus zumindest einem vorgegebenen geometrischen Parameter des modellierten Kinematikobjekts ein Abstand abgeleitet. Weiterhin wird für jedes modellierte Kinematikobjekt eine Ausdehnung des vorgegebenen Überwachungsbereichs durch Veränderung zumindest einer geometrischen Größe eines Überwachungsbereichs um den jeweils abgeleiteten Abstand geändert. Zur Positionsüberwachung wird dann eine Position des jeweiligen Kinematikobjekts in Relation zum jeweils geänderten Überwachungsbereich geprüft. Die geometrische Größe entspricht dabei vorzugsweise einer geometrischen Abmessung des Überwachungsbereichs. Damit ändert sich über die Änderung der geometrischen Größe die Ausdehnung des Überwachungsbereichs.

Als Parameter kann beispielsweise der Maximaldurchmesser oder die maximale räumliche Erstreckung eines modellierten Teils einer Kinematik angegeben werden, wobei sich in diesem Fall der Abstand für den Überwachungsbereich aus dem definierten Parameter in Form des Maximaldurchmessers oder der maximalen räumlichen Erstreckung über einen bekannten Zusammenhang ergibt, z.B. indem der Abstand dem halben Maximaldurchmesser entspricht.

Im Falle eines rechteckigen modellierten Teils einer Kinematik kann der Maximaldurchmesser als Parameter beispielshafterweise aus zwei weiteren Parametern in Form der Seitenlängen des Rechtecks berechnet werden. Der Abstand kann dann wiederum über einen bekannten Zusammenhang aus dem Parameter in Form des Maximaldurchmessers berechnet werden.

Zumindest ein Kinematikobjekt kann einen Teil der Kinematik, jedoch auch einen Bereich außerhalb der Kinematik darstellen. Es wird jedoch im Gegensatz zu bekannten Verfahren kein Kinematikobjekt als dreidimensionaler geometrischer Körper modelliert. Stattdessen werden relevante geometrische Informationen des modellierten Kinematikobjekts (z.B. Abmessungen eines Roboterarmes, eines Werkzeugs, etc.) herangezogen und auf den zu überwachenden Überwachungsbereich (erlaubter Arbeitsbereich oder verbotener Sicherheitsbereich) angewendet. Im Rahmen dieses Verfahrens wird der Überwachungsbereich vergrößert (im Falle des Sicherheitsbereichs) oder verkleinert (im Falle des Arbeitsbereichs). Dies hat die Konsequenz, dass keine Schnittpunkte zweier dreidimensionaler geometrischer Körper berechnet werden müssen, sondern lediglich der Schnittpunkt eines Kinematikobjekts einer Dimension kleiner zwei (Punkt oder Linie) mit einem null- ein-, zwei, oder dreidimensionalen Überwachungsbereich. Es wird also für jedes modellierte Kinematikobjekt der betreffende Überwachungsbereich durch Einfügen/Abziehen eines Abstands modifiziert, nicht je- doch das Kinematikobjekt selbst. Daher muss das Kinematikobjekt nicht als zweidimensionales oder dreidimensionales Objekt behandelt werden. Das Einfügen des Abstands kann an allen Seiten des Überwachungsbereichs erfolgen oder auch nur an vereinzelten Seiten, bzw. den dem Kinematikobjekt zugewandten Seiten. Diese Sicherheitsüberprüfung erfolgt vorzugsweise absolut unabhängig von den dynamischen Eigenschaften des Kinematikobjekts (z.B. des Roboters), wie Masse, Trägheit, etc., und unabhängig von der aktuellen oder zukünftigen Bahn des betrachteten Kinematikobjekts.

Zumindest ein Kinematikobjekt kann mit der Dimension Null modelliert werden. Damit stellen die Anzahl Kinematikobjekte Punkte dar, beispielsweise Naben eines Robotergelenks, Spitzen eines Werkzeugs, etc.

Zumindest ein Kinematikobjekt kann mit einer Dimension Eins modelliert werden.

Das Kinematikobjekt mit der Dimension Eins kann sich jeweils aus zwei modellierten punktförmigen Kinematikobjekten einer Dimension Null und einem definierten Abstand dazwischen zusammensetzen.

Der zu überwachende Überwachungsbereich kann einen Punkt, eine Linie, eine Fläche oder einen Körper darstellen und kann sich auch aus einzelnen Subüberwachungsbereichen zusammensetzen, die dann jeweils in Hinblick auf die Anzahl Kinematikobjekte überwacht werden müssen.

Vorteilhafterweise stellt der Überwachungsbereich einen Sicherheitsbereich dar, womit die Größe des Sicherheitsbereichs für jedes modellierte Kinematikobjekt um den Abstand vergrößert wird. Stellt der Sicherheitsbereich ein Rechteck bzw. einen Quader dar, so wird also das Rechteck bzw. der Quader um den durch aus dem geometrischen Parameters des Kinematikobjekts berechneten Abstand vergrößert, beispielsweise durch Verlängerung der Rechteckseiten bzw. Quaderseiten um den Abstand. Dabei können die Ecken des Rechtecks, bzw. des Quaders wieder zu Ecken werden oder auch abgerundet werden.

Alternativ stellt der Überwachungsbereich einen Arbeitsbereich dar, womit die Größe des Arbeitsbereichs um einen Abstand verkleinert wird. Stellt der Arbeitsbereich z.B. ein Rechteck dar, so wird das Rechteck (z.B. die Seitenlängen oder die halben Seitenlängen, ...) jeweils um den durch den geometrischen Parameter des Kinematikobjekts vorgegebenen Abstand verkleinert.

Diese Veränderung kann - sowohl bei Vorliegen eines Arbeitsbereichs, als auch eines Sicherheitsbereichs - auf allen Seiten des Überwachungsbereichs erfolgen, oder auch auf vereinzelten Seiten, wie z.B. der dem Objekt zugewandten Seite. Stellt der Überwachungsbereich einen Kreis dar, so kann der Radius bzw. Durchmesser des Kreises um den Abstand verändert, oder der Radius bzw. Durchmesser des Kreises nur in Richtung des Objekts verändert werden, wodurch der Kreis natürlich verformt wird. Gleiche Überlegungen gelten natürlich für sonstige Überwachungsbereiche der Dimension Zwei, sowie Überwachungsbereiche der Dimension Eins (Linien) oder Drei (Körper).

Die zu ändernde Geometrie des Überwachungsbereichs wird vorab bestimmt, kann aber auch während des Betriebs geändert werden. Grundsätzlich wird der Überwachungsbereich durch die Kinematik selbst und die durchzuführende Bewegung der Kinematik (erlaubte Bewegungsbereiche, Hindernisse) festgelegt. Diese grundlegende Geometrie kann beispielsweise aber auch anhand einer erwarteten Abweichung zwischen einer berechneten Position und einer realen Position des modellierten Kinematikobjekts angepasst werden. Diese erwartete Abweichung kann sich wiederum durch bekannte Fehlerreaktionszeiten, Differenzenquotienten, Diskretisierungsfehler, Extrapolationsungenauigkeiten, Rechenungenauigkeiten, Geber- und/oder Kopplungsauflösungen, Offsetfehler, mechanische Verformungen, etc. ergeben.

Der Abstand für jedes Kinematikobjekt kann z.B. in einer Kinematiktabelle vorliegen, womit dem Kinematikobjekt ein Abstand für betrachteten Arbeitsbereich eindeutig zugewiesen ist.

Einen großen Vorteil des erfindungsgemäßen Verfahrens stellt die hohe Genauigkeit dar. Zudem ist im Falle einer tabellarischen Ablegung der Parameter der jeweiligen Kinematikobjekte in Bezug zu den Überwachungsbereichen eine hohe Flexibilität gegeben.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 einen modellierten Teil eines Roboterarms
Fig.2a-d einen Sicherheitsbereich mit vier Kinematikobjekten
Fig.3a-e einen Arbeitsbereich mit vier Kinematikobjekten.

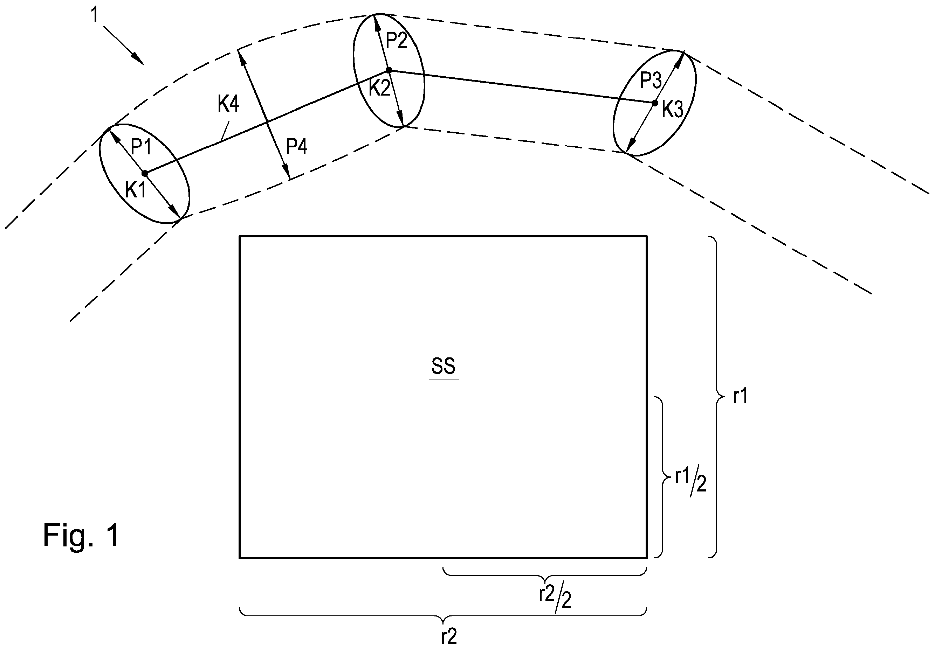

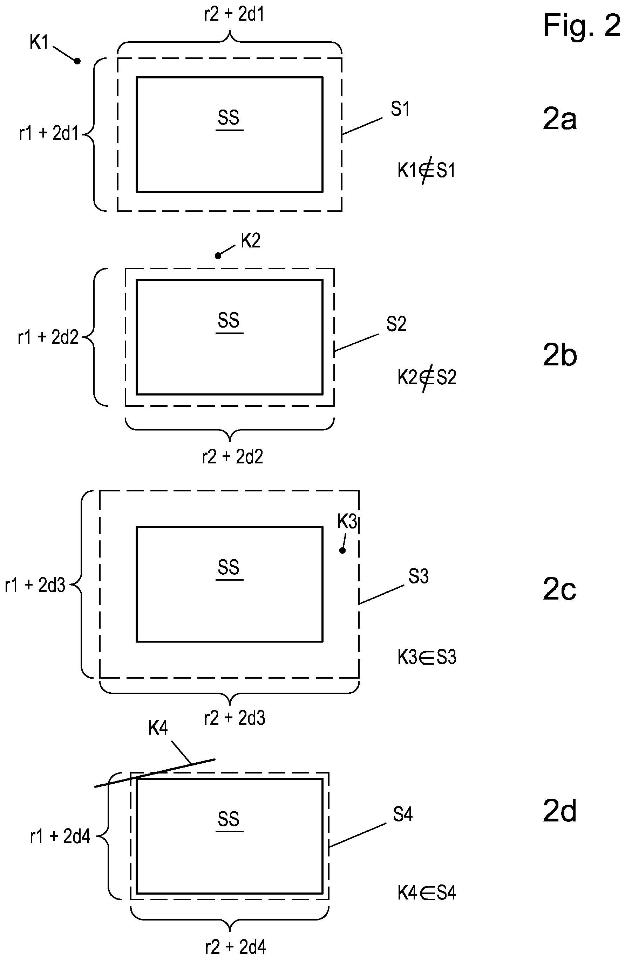

In Fig.1 ist ein zur einfacheren Darstellung zweidimensionaler Teil eines Roboterarms (fortan als Roboterarm bezeichnet) als Teil einer Kinematik 1, hier einer seriellen Kinematik, dargestellt, wobei die strichlierten Linien die räumliche Begrenzung des Roboterarms 1 beschreiben. Die Kinematik 1, oder ein Teil davon, wird erfindungsgemäß mit nulldimensionalen (0d) oder eindimensionalen (1d) Objekten, also mit einer Dimension D < 2, in weiterer Folge als Kinematikobjekte, modelliert. Im Beispiel der Fig.1 wird der Roboterarm 1 durch drei punktförmige (0d) Kinematikobjekte K1, K2, K3, die in diesem Fall die Gelenknaben des Roboterarms 1 darstellen, beschrieben. Die modellierten Kinematikobjekte K1, K2, K3 könnten dabei natürlich auch zu betrachtende Objekte, die sich außerhalb der Kinematik befinden, beschreiben, gelten dann dennoch als Teil der Kinematik. Es kann zur Modellierung der Kinematik 1 jedoch auch eine vereinfachte Form eines Drahtgittermodells (wire frame model) verwendet werden. Damit werden linienförmige (1d) Kinematikobjekte K4 modelliert, wie in Fig.1 durch die Verbindungslinie zwischen dem ersten punktförmigen Kinematikobjekt K1 und dem zweiten punktförmigen Kinematikobjekt K2 dargestellt. Ein linienförmiges (1d) Kinematikobjekte K4 verbindet dabei vorzugsweise zwei punktförmige (0d) Kinematikobjekte K1, K2 oder K2, K3. Im Rahmen des Ausführungsbeispiels nach Fig.2b-c werden die punktförmig modellierten Kinematikobjekte K1, K2, K3 betrachtet, in Fig.2d das linienförmige Kinematikobjekt K4.

Die Erweiterung auf ein Drahtgittermodell ist optional, wie auch eine mögliche Parametrierung des Linienabstandes zweier punktförmiger Kinematikobjekte K1, K2, K3. Diese Parametrierung und die Erweiterung auf ein Drahtgittermodell kann für jedes Kinematikobjekt K1, K2, K3, K4 separat erfolgen.

In Fig.1 ist zudem ein vorgegebener Sicherheitsbereich SS als Überwachungsbereich S ersichtlich. Der vorgegebene Sicherheitsbereich SS ergibt sich beispielsweise aus dem Aufstellungsort und der Umgebung der Kinematik 1 vor Ort und wird vorab definiert, bzw. kann als vorgegeben angenommen werden. Eine Sicherheitsfunktion einer Kinematik 1 stellt sicher, dass die Kinematik 1 (oder ein Teil davon) nicht in den Sicherheitsbereich SS eindringt, oder einen definierten Arbeitsbereich WS der Kinematik 1 verlässt. Die Sicherheitsfunktion ist beispielsweise in der Steuerung der Kinematik 1 implementiert, kann aber auch als eigenständiger Modul die Steuerung der Kinematik 1 ergänzen. Der Sicherheitsbereich SS stellt im dargestellten Ausführungsbeispiel ein Rechteck mit den Seitenlängen r1, r2, bzw. den halben Seitenlängen r1/2, r2/2, dar. Im Falle eines dreidimensional bewegten Roboterarms könnte der Sicherheitsbereich SS natürlich auch dreidimensional definiert sein.

Laut Stand der Technik würde zur Realisierung dieser Sicherheitsfunktion die Kinematik 1, oder ein Teil davon, als dreidimensionales Objekt oder eine Summe von dreidimensionalen Objekten modelliert werden, wobei ein Schnitt des Objekts bzw. der Objekte mit dem Sicherheitsbereich berechnet werden müsste. Diese Überprüfung ist jedoch sehr rechenaufwendig.

Erfindungsgemäß wird daher zumindest ein Teil der Kinematik 1 als eine Anzahl Kinematikobjekte K1, K2, K3, K4 die jeweils eine Dimension kleiner Zwei (D < 2) aufweisen, modelliert, also z.B. in Form eines Drahtgittermodells. Die Lage und Position der Kinematikobjekte K1, K2, K3, K4 im Raum ergibt sich immer eindeutig aus der bekannten Geometrie und Bewegung der Kinematik 1 und kann daher als bekannt vorausgesetzt werden. Nachdem die Sicherheitsfunktion in der Regel in der Steuerung der Kinematik 1 integriert ist, oder zumindest mit dieser in Verbindung steht, kann die Sicherheitsfunktion auch immer auf die aktuellen Lagen und Positionen der Kinematikobjekte K1, K2, K3, K4 zugreifen.

Um trotz der erfindungsgemäßen Modellierung der Kinematik 1 den Sicherheitsbereich SS überwachen zu können, wird nun erfindungsgemäß für jedes Kinematikobjekt K1, K2, K3, K4 ein definierter oder parametrierbarer geometrischer Parameter P1,P2,P3, P4 herangezogen und der vorgegebene Sicherheitsbereich SS damit abgeändert. Beispielhaft wird als Parameter P1, P2, P3, P4 jeweils ein maximaler Durchmesser des jeweiligen Teils der Kinematik 1 an der Anzahl Kinematikobjekte K1, K2, K3, K4 (den Gelenksnaben, bzw. eines Teil des Roboterarms) verwendet. Die Kinematik 1 (oder ein Teil davon) wird durch die Modellierung "verkleinert", was durch die Parameter P1, P2, P3, P4 ausgedrückt wird. Wird nun im Gegenzug der Sicherheitsbereich SS / Arbeitsbereich WS in Abhängigkeit von diesem Parameter P1, P2, P3, P4 vergrößert / verkleinert, kann die Modellierung der Kinematik 1 in Form von Kinematikobjekten K1, K2, K3, K4 für die Realisierung der Sicherheitsfunktion "ausgeglichen" werden.

Der geometrische Parameter P1, P2, P3, P4 kann z.B. aus einer hinterlegten Zuordnungstabelle, die vorab anhand der bekannten Geometrie der Kinematik 1 parametriert werden kann, folgen. Für jedes modellierte Kinematikobjekt K1, K2, K3, K4 wird nun aus dem geometrischen Parameter P1, P2, P3, P4 (hier also z.B. ein Durchmesser) ein erster, zweiter und dritter Abstand d1, d2, d3, d4 berechnet bzw. abgeleitet. Dabei kann der Parameter P1, P2, P3, P4 in einer einfachen Ausgestaltung auch direkt dem jeweiligen Abstand d1, d2, d3, d4, gegebenenfalls mit einem vorgegebenen Sicherheitszuschlag, entsprechen. Es gibt also einen für den Abstand d1, d2, d3, d4 zumindest einen charakteristischen Parameter P1, P2, P3, P4, wobei über eine gegebene, bekannte oder ableitbare Funktion f(P1), f(P2), f(P3), f(P4) der Abstand d1, d2, d3 d4 mit d1 = f(P1), d2 = f(P2), d3 = f(P3), d4 = f(P4) berechnet werden kann. Weist beispielsweise der Teil der Kinematik 1 einen rechteckigen Querschnitt mit den Seitenlängen a und b als weitere Parameter auf, dann ergibt sich der Parameter des maximalen Durchmessers aus den weiteren Parametern, in Form der Wurzel aus a²+b². Der Abstand d1, d2, d3 d4 ergibt sich dann wiederum aus dem Parameter des Durchmessers über einen Zusammenhang, z.B. indem der Abstand d1, d2, d3 d4 dem halben Durchmesser entspricht. Der Abstand d1, d2, d3 , d4 ändert für jedes Kinematikobjekt K1, K2, K3, K4 zumindest eine geometrische Größe G (hier die halben Seitenlängen r1/2, r2/2) des Sicherheitsbereichs SS und führt damit zu den geänderten Sicherheitsbereichen S1, S2, S3, S4. Im dargestellten Fall wird also die geometrische Größe G in Form der halben Seitenlängen r1/2, r2/2 (in Fig.2 zwecks Übersichtlichkeit nicht explizit eingezeichnet) um den Abstand d1, d2, d3, d4 geändert, womit das Rechteck insgesamt an jeder Seite um den doppelten Abstand 2*d1, 2*d2, 2*d3, 2*d4 verändert wird. Der Abstand d1, d2, d3, d4 kann also je nach Notwendigkeit in gewünschter Weise aus dem Parameter P1, P2, P3, P4 abgeleitet werden. Ebenso kann je nach Notwendigkeit die zu ändernde geometrische Größe G gewählt werden, hier beispielsweise die halben Seitenlängen r1/2, r2/2. Es wird der Sicherheitsbereich SS also für jedes modellierte Kinematikobjekt K1, K2, K3, K4 einzeln geändert und jedem modellierten Kinematikobjekt K1, K2, K3, K4 wird ein eigener geänderter Überwachungsbereich S1, S2, S3, S4 (hier Sicherheitsbereich) zugeordnet. In Fig.2a werden somit für das erste modellierte Kinematikobjekt K1 die halben Seitenlängen r1/2, r2/2 als geometrische Größe G um den ersten Abstand d1 vergrößert, was zum geänderten Überwachungsbereich S1 führt. Ebenso werden in Fig.2b-d jeweils für das zweite, dritte, bzw. vierte Kinematikobjekt K2, K3, K4 die halben Seitenlängen r1/2, r2/2 als geometrische Größe G um den zweiten, dritten, bzw. vierten Abstand d2, d3, d4 vergrößert, was zu den Überwachungsbereichen S2, S3, S4 führt.

Nun wird für die Sicherheitsfunktion die Position und Lage jedes überwachten, modellierten Kinematikobjekts K1, K2, K3, K4 im Raum in Relation zum jeweils zugeordneten geänderten Überwachungsbereich S1, S2, S3, S4 überprüft. Befindet sich im Beispiel nach Fig.2 ein modelliertes Kinematikobjekt K1, K2, K3, K4 im geänderten Überwachungsbereich S1, S2, S3, S4 so ist der überwachte Überwachungsbereich der Kinematik 1 (hier der Sicherheitsbereich SS) verletzt, wie es in Fig.2c für das dritte Kinematikobjekt K3 in Verbindung mit dem dritten geänderten Überwachungsbereich S3 und in Fig. 2d für das vierte Kinematikobjekt K4 in Verbindung mit dem vierten geänderten Überwachungsbereich S4 der Fall ist. Bei 1d-Objekten als Kinematikobjekt K1, K2, K3, K4 sind Schnittpunkte einer Geraden mit einer Fläche oder einem Raum zu prüfen. Bei 0d-Objekten ist einfach zu prüfen, ob ein Punkt innerhalb einer Fläche oder eines Raumes liegt. Beide Überprüfungen können mit sehr geringem Rechenaufwand erfolgen.

Natürlich können für den Überwachungsbereich S auch mehrere Abstände d1, d2, d3, d4 pro Kinematikobjekt K1, K2, K3, K4 berechnet werden, beispielsweise um im Falle eines rechteckigen Überwachungsbereichs S die Seitenlängen r1, r2, bzw. die halben Seitenlängen r1/2, r2/2, unterschiedlich zu ändern. Ebenso kann der Überwachungsbereich S statt der Fläche (Dimension Zwei) eine Linie (Dimension Eins), oder einen Körper (Dimension Drei) darstellen. Dabei muss ebenso die Lage der Anzahl Kinematikobjekte K1, K2, K3, K4 in Relation zum Überwachungsbereich S geprüft werden, beispielsweise in Form eines Schnittes.

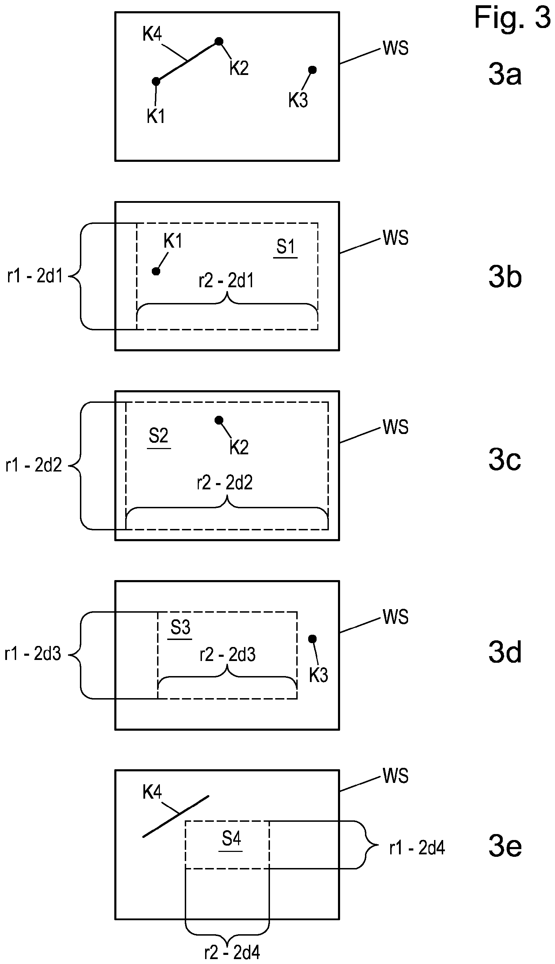

In Fig.3a-d ist ein analoges Verfahren für einen Arbeitsbereich WS als Überwachungsbereich S dargestellt. Der Arbeitsbereich WS definiert einen Bereich der von der Kinematik 1 oder einem Teil davon nicht verlassen werden darf. Daher verringern die Abstände d1, d2, d3, d4 die zumindest eine geometrische Größe G, also die halben Seitenlängen r1/2, r2/2 (in Fig.3 zwecks Übersichtlichkeit nicht explizit eingezeichnet) im dargestellten Ausführungsbeispiel. Die Prüfung der Position und Lage jedes überwachten modellierten Kinematikobjekts K1, K2, K3, K4 in Relation zum jeweils geänderten Überwachungsbereich S1, S2, S3, S4 erfolgt analog zum Sicherheitsbereich SS in Fig.2, wobei jedoch zum Unterschied eine Bereichsverletzung vorliegt, wenn ein modelliertes Kinematikobjekt K1, K2, K3, K4 außerhalb des geänderten Überwachungsbereich S1, S2, S3, S4 liegt, wie es in Fig.3d für das dritte Kinematikobjekt K3 in Relation zum geänderten Überwachungsbereich S3 und in Fig.3e für das vierte Kinematikobjekt K4 in Relation zum geänderten Überwachungsbereich S4 der Fall ist.

Es können natürlich auch mehrere unterschiedliche Überwachungsbereiche S definiert sein. Z.B. kann jedes Kinematikobjekt K1, K2, K3, K4 oder mehrere Kinematikobjekte K1, K2, K3, K4 einen eigenen zugewiesenen Überwachungsbereich S aufweisen. Dabei wird erfindungsgemäß wiederum der zugehörige Überwachungsbereich S für das jeweilige Kinematikobjekt K1, K2, K3, K4 geändert und auf Verletzung geprüft.

## Patentansprüche

1. Verfahren zur Positionsüberwachung einer Kinematik (1), wobei zumindest ein Teil der Kinematik mit einer Anzahl an Kinematikobjekten (K1, K2, K3, K4) modelliert wird und ein zu überwachender Überwachungsbereich (S) vorgegeben wird,
wobei die Anzahl der Kinematikobjekte (K1, K2, K3, K4) jeweils mit einer Dimension von Null oder einer Dimension von Eins modelliert wird,
und wobei für jedes modellierte Kinematikobjekt (K1, K2, K3, K4) jeweils aus zumindest einem vorgegebenen geometrischen Parameter (P1, P2, P3, P4) des modellierten Kinematikobjekts (K1, K2, K3, K4) ein Abstand (d1, d2, d3, d4) abgeleitet wird, **dadurch gekennzeichnet,**
**dass** für jedes modellierte Kinematikobjekt (K1, K2, K3, K4) eine Ausdehnung des vorgegebenen Überwachungsbereichs (S) durch Veränderung zumindest einer geometrischen Grö-βe des Überwachungsbereichs (S) um den jeweils abgeleiteten Abstand (d1, d2, d3, d4) geändert wird,
**und dass** zur Positionsüberwachung eine Position des jeweiligen Kinematikobjekts (K1, K2, K3, K4) in Relation zum jeweils geänderten Überwachungsbereich (S1, S2, S3, S4) geprüft wird.

2. Verfahren nach Anspruch 1, **dadurch gekennzeichnet, dass** zumindest ein Kinematikobjekt (K1, K2, K3) mit der Dimension Null modelliert wird.

3. Verfahren nach Anspruch 1, **dadurch gekennzeichnet, dass** zumindest ein Kinematikobjekt (K4) mit einer Dimension Eins modelliert wird.

4. Verfahren nach Anspruch 1 oder 3, **dadurch gekennzeichnet, dass** sich das Kinematikobjekt (K4) mit einer Dimension Eins jeweils aus zwei modellierten punktförmigen Kinematikobjekten (K1, K2) einer Dimension Null und einem definierten Abstand dazwischen zusammensetzt.

5. Verfahren nach einem der Ansprüche 1 bis 4, **dadurch gekennzeichnet, dass** zumindest ein Kinematikobjekt (K1, K2, K3, K4) einen Bereich außerhalb der Kinematik (1) modelliert.

6. Verfahren nach einem der Ansprüche 1 bis 5, **dadurch gekennzeichnet, dass** der Überwachungsbereich (S) eine Linie darstellt.

7. Verfahren nach einem der Ansprüche 1 bis 5, **dadurch gekennzeichnet, dass** der Überwachungsbereich (S) eine Fläche darstellt.

8. Verfahren nach einem der Ansprüche 1 bis 5, **dadurch gekennzeichnet, dass** der Überwachungsbereich (S) einen Körper darstellt.

9. Verfahren nach einem der Ansprüche 1 bis 8, **dadurch gekennzeichnet, dass** der Überwachungsbereich (S) einen Sicherheitsbereich (SS) darstellt und die Größe des Sicherheitsbereichs (SS) für jedes modellierte Kinematikobjekt (K1, K2, K3, K4) um den Abstand (d1, d2, d3, d4) vergrößert wird.

10. Verfahren nach einem der Ansprüche 1 bis 8, **dadurch gekennzeichnet, dass** der Überwachungsbereich (S) einen Arbeitsbereich (WS) darstellt und die Größe des Arbeitsbereichs (WS) für jedes modellierte Kinematikobjekt (K1, K2, K3, K4) um den Abstand (d1, d2, d3, d4) verkleinert wird.

11. Verfahren nach einem der Ansprüche 1 bis 10, **dadurch gekennzeichnet, dass** die Geometrie des Überwachungsbereich (S) anhand einer erwarteten Abweichung zwischen einer berechneten Position und einer realen Position des Kinematikobjekts (K1, K2, K3, K4) angepasst wird.

## Claims

1. A method for position monitoring of a kinematic linkage (1), wherein at least a part of the kinematic linkage is modeled with a number of kinematic objects (K1, K2, K3, K4), and a monitoring space (S) to be monitored is prespecified,
wherein the number of kinematic objects (K1, K2, K3, K4) is each modeled with a dimension of zero or a dimension of one,
and wherein for each modeled kinematic object (K1, K2, K3, K4), a distance (d1, d2, d3, d4) is derived from at least one prespecified geometric parameter (P1, P2, P3, P4) of the modeled kinematic object (K1, K2, K3, K4), **characterized in that**
for each modeled kinematic object (K1, K2, K3, K4), an extension of a predefined monitoring space (S) is changed by changing at least one geometric variable of the monitoring space (S) by the distance (d1, d2, d3, d4) derived in each case, **and that** for position monitoring, the position of the respective kinematic object (K1, K2, K3, K4) is checked in relation to the respectively modified monitoring space (S1, S2, S3, S4).

2. The method according to claim 1, **characterized in that** at least one kinematic object (K1, K2, K3) is modeled in zero dimensions.

3. The method according to claim 1, **characterized in that** at least one kinematic object (K4) is modeled in one dimension.

4. The method according to claim 1 or 3, **characterized in that** each kinematic object (K4) having one dimension is composed of two modeled point-shaped kinematic objects (K1, K2) having zero dimensions, and a defined distance between them.

5. The method according to one of the claims 1 to 4, **characterized in that** at least one kinematic object (K1, K2, K3, K4) models a space outside the kinematic linkage (1).

6. The method according to one of the claims 1 to 5, **characterized in that** the monitoring space (S) is a line.

7. The method according to one of the claims 1 to 5, **characterized in that** the monitoring space (S) is an area.

8. The method according to one of the claims 1 to 5, **characterized in that** the monitoring space (S) is a body.

9. The method according to one of the claims 1 to 8, **characterized in that** the monitoring space (S) is a safe space (SS) and the size of the safe space (SS) is increased by the distance (d1, d2, d3, d4) for each modeled kinematic object (K1, K2, K3, K4).

10. The method according to one of the claims 1 to 8, **characterized in that** the monitoring space (S) is a workspace (WS) and the size of the workspace (WS) is reduced by the distance (d1, d2, d3, d4) for each modeled kinematic object (K1, K2, K3, K4).

11. The method according to one of the claims 1 to 10, **characterized in that** the geometry of the monitoring space (S) is adapted on the basis of an expected deviation between a computed position and a real position of the kinematic object (K1, K2, K3, K4).

## Revendications

1. Procédé de surveillance de la position d'un système cinématique (1), dans lequel au moins une partie du système cinématique est modélisée avec un certain nombre d'objets cinématiques (K1, K2, K3, K4) et une zone de surveillance (S) à surveiller est prédéfinie, dans lequel le nombre d'objets cinématiques (K1, K2, K3, K4) est respectivement modélisé avec une dimension de zéro ou une dimension de un et dans lequel pour chaque objet cinématique modélisé (K1, K2, K3, K4), une distance (d1, d2, d3, d4) est dérivée respectivement à partir d'au moins un paramètre géométrique prédéfini (P1, P2, P3, P4) de l'objet cinématique modélisé (K1, K2, K3, K4), **caractérisé en ce**
**que** pour chaque objet cinématique modélisé (K1, K2, K3, K4) une extension de la zone de surveillance (S) prédéfinie est modifiée par modification d'au moins une grandeur géométrique de la zone de surveillance (S) de la distance (d1, d2, d3, d4) respectivement dérivée,
**et en ce que** pour la surveillance de la position, une position de l'objet cinématique (K1, K2, K3, K4) respectif est vérifiée par rapport à la zone de surveillance (S1, S2, S3, S4) respectivement modifiée.

2. Procédé selon la revendication 1, **caractérisé en ce qu'**au moins un objet cinématique (K1, K2, K3) est modélisé avec la dimension de zéro.

3. Procédé selon la revendication 1, **caractérisé en ce qu'**au moins un objet cinématique (K4) est modélisé avec la dimension de un.

4. Procédé selon la revendication 1 ou 3, **caractérisé en ce que** l'objet cinématique (K4) avec une dimension de un se compose respectivement de deux objets cinématiques (K1, K2) modélisés en forme de point d'une dimension de zéro et d'une distance définie entre eux.

5. Procédé selon l'une quelconque des revendications 1 à 4, **caractérisé en ce qu'**au moins un objet cinématique (K1, K2, K3, K4) modélise une zone en dehors du système cinématique (1).

6. Procédé selon l'une quelconque des revendications 1 à 5,
**caractérisé en ce que** la zone de surveillance (S) représente une ligne.

7. Procédé selon l'une quelconque des revendications 1 à 5,
**caractérisé en ce que** la zone de surveillance (S) représente une surface.

8. Procédé selon l'une quelconque des revendications 1 à 5,
**caractérisé en ce que** la zone de surveillance (S) représente un corps.

9. Procédé selon l'une quelconque des revendications 1 à 8,
**caractérisé en ce que** la zone de surveillance (S) représente une zone de sécurité (SS) et la grandeur de la zone de sécurité (SS) est augmentée pour chaque objet cinématique (K1, K2, K3, K4) modélisé de la distance (d1, d2, d3, d4).

10. Procédé selon l'une quelconque des revendications 1 à 8,
**caractérisé en ce que** la zone de surveillance (S) représente une zone de travail (WS) et la grandeur de la zone de travail (WS) est diminuée pour chaque objet cinématique (K1, K2, K3, K4) modélisé de la distance (d1, d2, d3, d4).

11. Procédé selon l'une quelconque des revendications 1 à 10,
**caractérisé en ce que** la géométrie de la zone de surveillance (S) est adaptée à l'aide d'un écart attendu entre une position calculée et une position réelle de l'objet cinématique (K1, K2, K3, K4).
